(19) Europäisches Patentamt
European Patent Office
Office européen des brevets

(11) **EP 1 983 455 A2**

(12) **EUROPÄISCHE PATENTANMELDUNG**

(43) Veröffentlichungstag:
**22.10.2008 Patentblatt 2008/43**

(51) Int Cl.:
*G06F 17/50* (2006.01)   *G05B 19/4093* (2006.01)

(21) Anmeldenummer: **08405095.4**

(22) Anmeldetag: **02.04.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **12.04.2007   CH 6032007**

(71) Anmelder: **Autoform Engineering GmbH**
**8173 Neerach (CH)**

(72) Erfinder:
• **Kubli, Waldemar**
  **8173 Neerach (CH)**
• **Sester, Matthias**
  **8048 Zürich (CH)**

(74) Vertreter: **Frei Patent Attorneys**
**Frei Patentanwaltsbüro AG**
**Postfach 1771**
**8032 Zürich (CH)**

(54) **Grenzdehnungsanalyse**

(57)     In der rechnerbasierten Analyse von Umformprozessen, beispielsweise bei der Herstellung von Blechteilen für die Automobilindustrie, wird die Materialbelastung durch Hauptdehnungen $\varepsilon_1$, $\varepsilon_{11}$ (major and minor strain) repräsentiert und bezüglich einer Grenzdehnungskurve (forming limit curve) visualisiert. Die Grenzdehnungskurve ist jedoch abhängig vom Pfad der Belastung.

Im erfindungsgemässen Verfahren wird von einem Zielzustand (4n) des Materials, wie er in der rechnerischen Simulation des Umformprozesses bestimmt wurde, ausgegangen. Dabei kann der Zielzustand (4n) insbesondere über einen nichtproportionalen Verlauf (3) der Spannungen und Dehnungen erreicht worden sein. Es wird nun ein proportionaler Verlauf einer Belastung und damit der Zustandsvariablen des Materials, insbesondere der Spannungen ($\sigma$) bestimmt, welcher zu demselben Zielzustand führt. Zu diesem proportionalen Belastungsverlauf wird der zugehörige proportionale Dehnungsverlauf ermittelt. Der Dehnungszustand (4p), der aus diesem Dehnungsverlauf resultiert, wird als äquivalenter Dehnungszustand (4p) bezeichnet und kann im Grenzdehnungsdiagramm zur Beurteilung des Zielzustandes verwendet werden. Dabei wird der äquivalente Dehnungszustand in Bezug zur Grenzdehnungskurve (1) für proportionale Dehnungsverläufe gesetzt.

**Fig. 2**

EP 1 983 455 A2

**Beschreibung**

Die Erfindung bezieht sich auf das Gebiet der rechnerischen Analyse von Umformprozessen, wie sie bei der Bearbeitung von Blechen durch Umformtechnik auftreten. Sie bezieht sich insbesondere auf ein Verfahren zur Grenzdehnungsanalyse, und auf ein entsprechendes Computerprogramm, einen Datenträger und eine Datenverarbeitungseinrichtung gemäss dem Oberbegriff der entsprechenden unabhängigen Patentansprüche.

**STAND DER TECHNIK**

Umformteile, insbesondere Blechumformteile für beispielsweise die Automobilherstellung, werden in der Regel durch Tiefziehen hergestellt. Halbzeuge, sogenannte Blechplatinen, werden zu diesem Zweck in mehrteilige Umformwerkzeuge gelegt. Mittels Pressen, in denen die Umformwerkzeuge eingespannt sind, werden die Teile geformt. Die Teile werden in der Regel über mehrere Umformstufen wie Ziehen, Nachschlagen, Einstellen, etc. kombiniert mit Beschneidschritten aus einer flachen Blechplatine hergestellt.

Zur Auslegung von Umformwerkzeugen, also beispielsweise Stempel, Matrizen und Blechhaltern, sowie von Umformprozessen, also beispielsweise Werkzeugkräfte, Ziehleisten, Schmierung, Form und Material für die Blechplatine, werden CAD/CAE (computer aided design / computer aided engineering) Programme eingesetzt. Diese simulieren respektive modellieren mittels Finite-Elemente Modellen (FEM) einen Umformprozess anhand von Simulationsparametern. Simulationsparameter beschreiben einerseits eine Geometrie der im Umformprozess verwendeten Werkzeuge, und andererseits Prozessparameter. Die Simulation berechnet die in den Materialpunkten des FE-Modelles auftretenden Dehnungen und andere Zustandsvariablen des Materials, insbesondere Spannungen, in bekannter Weise auf Grundlage von Materialgesetzen.

Zur Beurteilung der Simulationsergebnisse werden die Spannungen und Dehnungen in Materialpunkten einem Konstrukteur visuell dargestellt. Üblicherweise werden in der Blechumformtechnik nur ebene Tensoren der Spannung und Dehnung betrachtet. Zur Visualisierung dieser Tensoren wird eine Hauptachsentransformation durchgeführt, und ein ebener Dehnungstensor in diesem Hauptachsensystem durch eine grössere Hauptdehnung $\varepsilon_I$ (major strain) und eine kleinere Hauptdehnung $\varepsilon_{II}$ (major strain) repräsentiert. Analoges gilt für Spannungen (major stress, minor stress). Zur Beurteilung von Materialzuständen ist es allgemein üblich, die Lage eines durch die Hauptdehnungen beschriebenen Dehnungszustandes in Bezug zur Lage einer Grenzdehnungskurve zu beurteilen. Die Grenzdehnung in einem Metallblech ist definiert als der Zustand, in welchem eine weitere Verformung des Bleches zu Versagen des Materials, insbesondere zu Einschnürungen und Rissen führt.

An dieser Stelle ist es wichtig, proportionale und nichtproportionale Belastungen deutlich zu unterscheiden. Bei einer proportionalen Belastung ändern sich alle Belastungsparameter (z.B. die Komponenten eines Dehnungs- oder Spannungstensors) in einem festen Verhältnis zueinander. Bei einer nichtproportionalen Belastung dagegen kann jeder Belastungsparameter einer eigenen Zeitfunktion folgen. In der Plastizitätstheorie hat eine spannungsgesteuerte proportionale Belastung immer auch einen proportionalen Dehnungspfad zur Folge und umgekehrt, denn für den Zuwachs an plastischer Dehnung gilt die Beziehung $d\varepsilon_{ij}^{p} = d\lambda\, n_{ij}$ mit $n_{ij} = \partial f / \partial \sigma_{ij}$ wobei f eine skalare Fliessfunktion ist, $\sigma_{ij}$ bzw. $\varepsilon_{ij}^{p}$ die Komponenten des Spannungs- bzw. plastischen Dehnungstensors und $\lambda$ eine Proportionalitätskonstante.

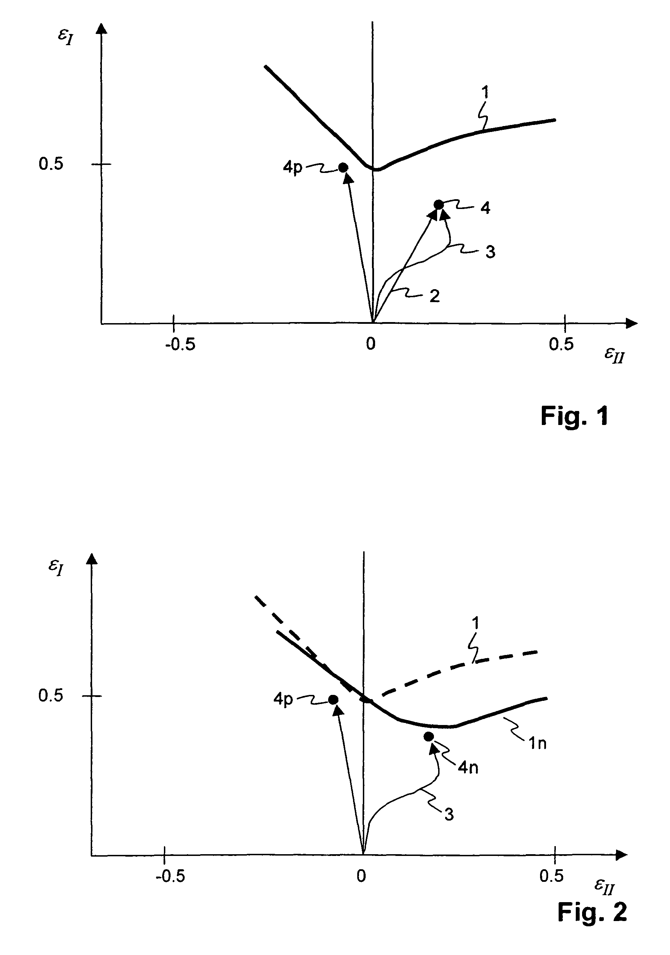

Üblicherweise werden Grenzdehnungen in zweiachsigen Versuchen gemessen, bei denen die Lastkomponenten proportional erhöht werden, bis eine Einschnürung eintritt. Dann ist bekannt, dass für bestimmte Kombinationen der Hauptdehnungen $\varepsilon_I$ und $\varepsilon_{II}$ bei weiterer Zunahme der Dehnungen das Materialversagen stattfindet. Eine Kurve entsprechend solchen Kombinationen wird als Grenzdehnungskurve (Forming Limit Curve, FLC) in einem Grenzdehnungsdiagramm (Forming Limit Diagram, FLD) bezeichnet, und ist beispielhaft in **Figur 1** abgebildet. Ähnliche Figuren und weitere Information zum Hintergrund der Erfindung finden sich im Artikel "A general forming limit criterion for sheet metal forming"; Thomas B. Stoughton; International Journal of Mechanical Sciences; 42 (2000); Seiten 1-27.

Die Grenzdehnungskurve 1 wird experimentell für ein bestimmtes Material und gegebenenfalls auch für Bleche mit bestimmten Dicken bestimmt. Wie im genannten Artikel unter anderem beschrieben ist, hat sich gezeigt, dass die Grenzdehnungskurve 1 nur dann gültig ist, wenn ein proportionaler Dehnungspfad vorliegt, das heisst, dass im Verlauf 2 der Dehnung vom ungedehnten Zustand zu einem Zielzustand 4 das Verhältnis von $\varepsilon_I$ und $\varepsilon_{II}$ zu jedem Zeitpunkt konstant ist. Das Grenzdehnungsdiagramm ist zur Analyse und Visualisierung von Dehnungszuständen und noch vorhandenen Reserven bis zum Materialversagen bekannt und beliebt. Konstrukteure sind sich gewohnt, die Versagenswahrscheinlichkeit von Materialpunkten entsprechend ihrer Lage zur Grenzdehnungskurve 1 zu beurteilen. Insbesondere kann in Abhängigkeit der Lage des Dehnungszustandes im Zielzustand 4 zur Grenzdehnungskurve 1 auf Versagen oder Nichtversagen des Materials im betrachteten Materialpunkt geschlossen werden.

In realen Umformprozessen treten aber nichtproportionale Dehnungspfade auf. Dies ist der Fall, wenn mehrere Umformoperationen aufeinander folgen, und so ein bestimmter Materialabschnitt erst in eine Richtung und anschliessend in eine andere Richtung gedehnt wird, wobei er dann beispielsweise in der ersten Richtung auch wieder gestaucht werden kann. Auch im Verlauf einer einzigen Umformoperation können solche nichtproportionalen Dehnungspfade entstehen. Ein beispielhafter nichtproportionaler Dehnungspfad 3 ist in der **Figur 1** eingezeichnet. Er führt zum gleichen Zielzustand 4 wie der proportionale Pfad 2, jedoch ist die Grenzdehnungskurve 1 nicht mehr zur Beurteilung dieses Zielzustandes 4 gültig, da die Grenzdehnungskurve 1 abhängig vom Dehnungspfad 2, 3 ist: Je nach Pfad ergeben sich verschiedene Grenzdehnungskurven, wie beispielshaft in der **Figur 2** dargestellt ist. Für den Zielzustand 4n, der über einen nichtproportionalen Belastungspfad 3 erreicht wird, und zum Schluss dieselben Dehnungswerte $\varepsilon_I$ und $\varepsilon_{II}$ aufweist wie der Zielzustand 4 in der Figur 1, gilt also eine andere Grenzdehnungskurve In. Die unveränderte Grenzdehnungskurve 1 für proportionale Dehnungen ist zum Vergleich strichliert eingezeichnet.

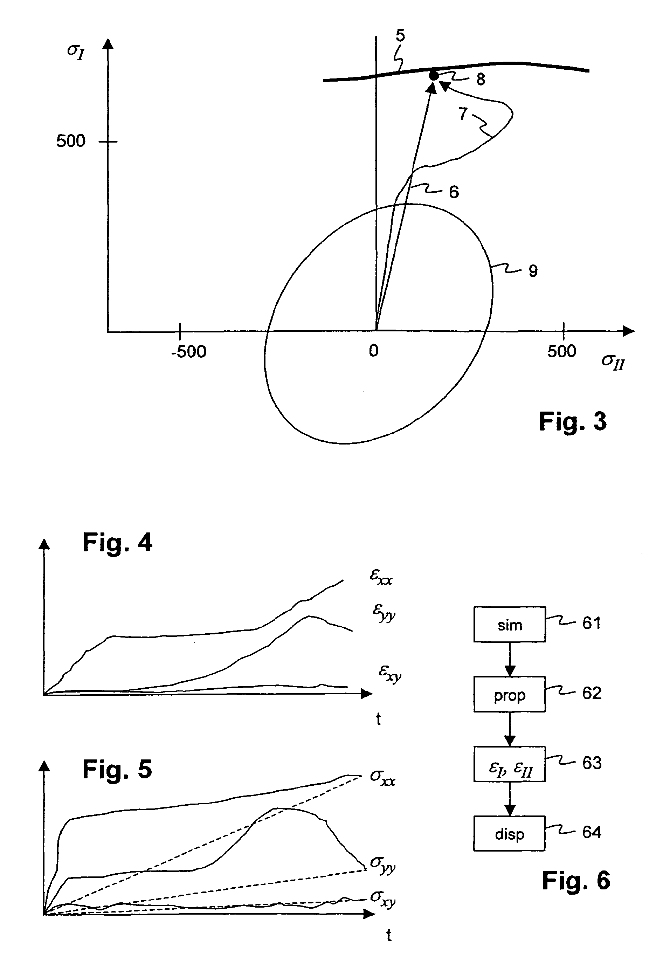

Offensichtlich geht in dieser Weise die Vergleichbarkeit und die intuitive Beurteilung von Dehnungszuständen verloren. Deshalb wird im genannten Artikel von Stoughton vorgeschlagen, die Analyse im Spannungsraum (stress space) vorzunehmen, wie in der **Figur 3** dargestellt ist. Analog zum Dehnungsraum werden die Spannungen auf ein Hauptachsensystem mit der grösseren Hauptspannung $\sigma_I$ (major stress) und der kleineren Hauptspannung $\sigma_{II}$ (minor stress) transformiert. Ebenfalls analog wird eine Grenzspannungskurve 5 (Forming Limit Stress Curve) eingeführt, so dass, wenn ein Spannungszustand 8 diese Kurve überschreitet, das Materialversagen zu erwarten ist. Experimente haben für die typisch in der Blechumformung verwendeten Materialien gezeigt, dass die Form und Lage der Grenzspannungskurve 5 dabei weitgehend unabhängig vom Pfad ist, über welchen ein zu beurteilender Spannungszustand erreicht wird, insbesondere davon, ob ein proportionaler Spannungsverlauf 6 oder ein nichtproportionaler Verlauf 7 vorliegt.

In der Praxis stellt sich das Problem, dass die Versagensbeurteilung mit solchen Spannungskurven den Benutzern von entsprechenden Simulationsprogrammen nicht geläufig ist, und dass die Sensitivität der Spannungen im Bereich der Grenzspannungskurve sehr tief ist, d.h. dass infolge der in der Nähe des Versagens geringen Materialverfestigung auch grössere Dehnungsänderungen nur zu geringen Spannungsänderungen führen, so dass bereits kleine Unsicherheiten in der Lage eines zu beurteilenden Spannungszustandes den Unterschied zwischen Versagen und Nichtversagen ausmachen können. Aus diesen Gründen wird die Grenzspannungskurve in der Praxis kaum zur Beurteilung des Versagens herangezogen.

Der Artikel "Einfluss des Formänderungsweges auf die Grenzformänderungen des Feinblechs", Wolfgang Müschenborn und Hans-Martin Sonne, Arch. Eisenhüttenwes. 46, Nr. 9, September 1975, Seiten 597-602, beschreibt, wie sich die Grenzdehnungskurve (dort als Grenzformänderungskurve bezeichnet) verschiebt, wenn ein Dehnungspfad (oder Formänderungsweg) aus zwei jeweils in sich proportionalen Dehnungspfaden besteht (Bild 9). So kann aus einem experimentell ermittelten Grenzdehnungszustand (bei dem also das Materialversagen festgestellt wird), der nach einem solchen zweiteiligen Dehnungspfad auftritt, ein entsprechender Punkt auf der Grenzdehnungskurve für rein proportionale Belastung bestimmt werden. Es ist jedoch nicht ersichtlich, wie diese Bestimmung durchgeführt wird, und wie im Fall von mehr als zwei proportionalen Dehnungspfad-Abschnitten oder im Fall von beliebigen Dehnungspfaden vorzugehen wäre. Ferner ist die Beurteilung eines beliebigen Dehnungszustandes in Bezug zur Grenzdehnungskurve nicht vorgesehen.

"Path-dependence of the forming limit stresses in a sheet metal", KengoYoshida, Toshihiko Kuwabara, Mitsutoshi Kuroda, International Journal of Plasticity, Pergamon, Bd. 23, Nr. 3, 2006-12-04, pp. 361-384, beschreibt die Abhängigkeit der Grenzspannungskurve vom Dehnungspfad. Die Analyse verwendet verfeinerte Materialmodelle und zeigt, unter welchen Umständen eine Pfadabhängigkeit der Grenzspannungskurve auftritt (bei "unstable pseudolocalization"). Es wird jedoch keine Rücktransformation zur Bestimmung von äquivalenten Dehnungen aus Spannungen offenbart.

"The system for sheet metal forming design of complex parts", J. Gronostajski, A. Matuszak, A. Niechajowicz, Z. Zimniak, J. Materials Processing Technology, Elsevier, Amsterdam, Bd. 157-158, 2004-12-20, pp. 502-507, zeigt unter anderem den Einsatz der Grenzspannungskurve in einem FEM-System. Dabei wird die Annahme getroffen, dass die Grenzspannungskurve unabhängig vom Dehnungspfad ist. Es wird jedoch keine Rücktransformation zur Bestimmung von äquivalenten Dehnungen aus Spannungen offenbart.

"An experimental and theoretical analysis on the application of stress-based forming limit criterion", M. C. Butuc, J. J. Gracio, A. Barata de Rocha, Int. J. Mechanical Sciences, Pergamon, Oxford, Bd. 48, Nr. 4, 2006-04, pp. 414-429, beschreibt Variantenrechnungen mit unterschiedlichen linearen und komplexen Dehnungspfaden und deren Einfluss auf die Grenzspannungskurve. Der Einfluss verschiedener Parameter wird ebenfalls berücksichtigt. Es wird jedoch auch hier keine Rücktransformation zur Bestimmung von äquivalenten Dehnungen aus Spannungen offenbart.

## DARSTELLUNG DER ERFINDUNG

Es ist deshalb Aufgabe der Erfindung, ein Verfahren zur Grenzdehnungsanalyse der eingangs genannten Art zu schaffen, welches eine verbesserte Analyse, Beurteilung und Visualisierung von Grenzdehnungszuständen erlaubt, sowie ein entsprechendes Computerprogramm, einen Datenträger und eine Datenverarbeitungseinrichtung.

Diese Aufgabe lösen ein Verfahren zur Grenzdehnungsanalyse, ein Computerprogramm, ein Datenträger und eine Datenverarbeitungseinrichtung mit den Merkmalen der entsprechenden unabhängigen Patentansprüche. Die Grenzdehnungsanalyse betrifft dabei Umformprozesse an einem in einem oder mehreren Umformschritten umgeformten Blech.

Im erfindungsgemässen Verfahren wird also von einem Zielzustand des Materials, wie er in der rechnerischen Simulation des Umformprozesses bestimmt wurde, ausgegangen. Dabei kann der Zielzustand insbesondere über einen nichtproportionalen Verlauf der Spannungen und Dehnungen erreicht worden sein. Es wird nun ein proportionaler Verlauf einer Belastung und damit der Spannungen bestimmt, welcher zu demselben Zielzustand im Spannungsraum führt. Zu diesem proportionalen Spannungsverlauf wird der zugehörige proportionale Dehnungsverlauf ermittelt. Der Dehnungszustand, der aus diesem Dehnungsverlauf resultiert, wird als äquivalenter Dehnungszustand bezeichnet. Dieser äquivalente Dehnungszustand kann nun im Grenzdehnungsdiagramm zur Beurteilung des Zielzustandes verwendet werden! Dabei wird der äquivalente Dehnungszustand in Bezug zur Grenzdehnungskurve für proportionale Dehnungen gesetzt.

Es ist also nur eine einzige Grenzdehnungskurve erforderlich, und es können alle betrachteten Punkte (äquivalente Dehnungszustände) im Dehnungsraum in Bezug auf dieselbe Kurve beurteilt werden. Dadurch kann auch bei nichtproportionalen Verläufen eine einheitliche Analyse und auch ein Vergleich verschiedener Zustände des Materials erfolgen. Die Darstellung ist vereinfacht und die technische Aussage und Interpretierbarkeit wesentlich verbessert.

Durch den Umweg über den Spannungsraum, oder einen anderen Zustandsraum, in welchem die Zustandspunkte bezüglich Versagen unabhängig vom Weg sind, über welchen sie erreicht wurden, sind also äquivalente Dehnungszustände ermittelt worden, welche jeweils einer proportionalen Dehnung entsprechen, die zum selben Spannungszustand führt.

Der Begriff "Zielzustand" bezieht sich hier auf das Ziel im Spannungsraum, welches mit der äquivalenten Dehnung erreicht werden soll. Im Zusammenhang mit dem ganzen Teileherstellungsprozess kann dieser Zielzustand einem Zwischenzustand oder einem Endzustand des Umformprozesses entsprechen.

Die obige Beschreibung zeigt das zugrundeliegende Prinzip der Bestimmung der äquivalenten Dehnungen anhand eines gegebenen Zielzustands der Spannungen. In der Praxis bestehen verschiedene Möglichkeiten, dieses Prinzip umzusetzen.

In einer bevorzugten Ausführungsform der Erfindung wird ein proportionaler Dehnungsverlauf mit vorgegebenem Startwert für das Verhältnis der Dehnungen simuliert. Es werden aus der Simulation die Spannungen im Endzustand, nach dem Dehnungsverlauf, berechnet. Diese Spannungen werden mit dem Zielzustand der Spannungen verglichen. Anhand der Abweichungen wird durch ein Optimierungsverfahren das Verhältnis der Dehnungen iterativ angepasst, bis die Simulation mindestens annähernd zum Zielzustand der Spannungen führt, also beispielsweise bis die Abweichung der berechneten Spannungen von den Spannungen im Zielzustand ein bestimmtes Mass unterschreitet. Die so bestimmten proportionalen Dehnungen führen zum gesuchten äquivalenten Dehnungszustand.

In einer anderen bevorzugten Ausführungsform der Erfindung werden in einer einmalig durchgeführten Vorbereitungsphase eine Vielzahl von korrespondierenden Dehnungszuständen und Spannungszuständen für proportionale Verläufe berechnet. Die Abbildung zwischen Spannungen und Dehnungen wird in Tabellen oder durch Approximationsfunktionen oder eine Kombination von Tabellen und Funktionen gespeichert. Diese Vorausberechnung geschieht jeweils für ein bestimmtes Material, evtl. in Kombination mit weiteren Parametern wie beispielsweise der Blechdicke.

Der Begriff "Material" bezeichnet zusammenfassend einerseits eine bestimmte Legierung und andererseits eine bestimmte Behandlung des Materials. Im wiederholten Betrieb des Verfahrens wird jeweils für einen gegebenen Zielzustand der Spannungen der äquivalente Dehnungszustand aus den Tabellen ausgelesen respektive mittels der Approximationsfunktionen berechnet. Anstelle von Approximationsfunktionen können, falls bekannt, auch exakte und/ oder analytisch bestimmbare Funktionen verwendet werden. Es wird also die proportionale Belastung direkt in Form der äquivalenten Dehnung beschrieben, ohne dass ein proportionaler Verlauf der Spannungen explizit berechnet wird.

In einer anderen bevorzugten Ausführungsform der Erfindung werden bei der praktischen Ausführung des Verfahrens nicht unbedingt die Spannungen direkt verwendet, sondern weitere Zustandsgrössen oder Zustandsvariablen, welche bezüglich Versagen unabhängig vom Weg sind, über welchen sie erreicht wurden. Bei den üblichen Finite-Elemente-Implementationen für Probleme mit finiten plastischen Dehnungen stehen beispielsweise eine Reihe von anderen Zustandsgrössen zur Verfügung, welche in direkter Beziehung zu den Spannungen stehen und damit für die Ausführung des Verfahrens herangezogen werden können, wie zum Beispiel eine Fliessnormale oder ein Inkrement der Dehnungen im zuletzt berechneten Zeitschritt der Simulation. Ein Satz von solchen Zustandsgrössen ist vorzugsweise auf die Spannungszustände abbildbar, und insbesondere sind auch umgekehrt die Spannungszustände auf einen solchen Satz von Zustandsgrössen, also durch eine bijektive Abbildung, abbildbar. Deshalb können die anderen Sätze von Zustandsgrössen auch als "spannungsbezogene Zustandsgrössen" oder "spannungsäquivalente Zustandsgrössen" oder "wegunabhängige Zustandsgrössen" bezeichnet werden.

Des weiteren können zum Beispiel aus Gründen der numerischen Stabilität statt den Zustandsgrössen, welche den aktuellen Spannungszustand oder spannungsbezogene Zustandsgrössen in einem Materialpunkt beschreiben, eine zeitliche oder örtliche Mittelung oder Filterung dieser Grössen verwendet werden. Die zeitliche Filterung berücksichtigt die letzten paar Zustandswerte vor dem Zielzustand, die räumliche Filterung berücksichtigt benachbarte Materialpunkte, beispielsweise in einer Glättung der Spannungswerte in den Materialpunkten.

In einer weiteren bevorzugten Ausführungsform der Erfindung wird der äquivalente Dehnungszustand mittels der Materialgesetze aus dem Zielspannungszustand berechnet. Dabei wird vorzugsweise der elastische Anteil der Verformung gegenüber dem plastischen Anteil vernachlässigt und die Gesamtdehnung mit der plastischen Dehnung gleichgesetzt, also $\varepsilon_{ij} = \varepsilon_{ij}^{p}$. Dies verursacht bei Metallen nur geringe Ungenauigkeiten und ist im Rahmen der Versagensbeurteilung in der Umformtechnik in guter Näherung gerechtfertigt. Ferner wird vorzugsweise, aufgrund der Tatsache, dass ein proportionaler Dehnungsverlauf vorliegt, eine Integration der plastischen Dehnungsinkremente über einen Verformungsweg durch eine Multiplikation ersetzt. Es muss also aufgrund der Annahme eines proportionalen Dehnungspfades nicht entlang des Verformungspfades über die plastischen Dehnungsinkremente $d\varepsilon_{ij}^{p}$ integriert werden.

Stattdessen werden gesamte plastische Dehnungen $\varepsilon_{ij}^{p}$ bestimmt, die zu den Spannungen im Zielzustand führen. Die gesamten plastischen Dehnungen $\varepsilon_{ij}^{p}$ sind koaxial zur Fliessnormale $n_{ij}$ im Zielzustand der Spannungen, das heisst $\varepsilon_{ij}^{p} = \lambda\, n_{ij}$. Dabei entspricht λ einem plastischen Multiplikator. Vorzugsweise wird λ anhand der Materialgesetze aus dem Spannungs- und Dehnungszustand im Zielzustand ermittelt, beispielsweise über das Fliessgesetz und/oder die Spannungs-DehnungsKurve und/oder das Arbeitsprinzip. Vorzugsweise wird die Fliessnormale $n_{ij}$ über die Beziehung $n_{ij} = \partial f / \partial \sigma_{ij}$ aus dem Zielspannungszustand rückgerechnet. Alternativ kann der äquivalente Dehnungspfad auch aus anderen Zustandsvariablen des Materials gerechnet werden, beispielsweise direkt aus der aktuellen Fliessnormalen $n_{ij}$ im Zielzustand. Weitere denkbare Zustandsvariablen sind unter anderem das aktuelle plastische Dehnungsinkrement $d\varepsilon_{ij}^{p}$ oder ein zeitlicher Mittelwert (z.B. floating average) des plastischen Dehnungsinkrements $d\varepsilon_{ij}^{p}$ oder andere, spannungsbezogene Zustandsgrössen, welche in direkter Beziehung zum Zielspannungszustand stehen.

Grundsätzlich sind, je nachdem was für Vereinfachungen getroffen werden, verschiedene Berechnungsverfahren möglich. Gemeinsam ist aber der Gedanke, dass eine proportionale Belastung ermittelt wird, die zu einem gegebenen Zielzustand des Materials führt, und der Dehnungszustand entsprechend dieser proportionalen Belastung im Grenzdehnungsdiagramm verwendet wird.

Das Datenverarbeitungssystem zur Grenzdehnungsanalyse weist Speichermittel mit darin gespeicherten Computerprogrammcodemitteln auf, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Das Computerprogramm zur Grenzdehnungsanalyse gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt einen Datenträger, respektive ein computerlesbares Medium auf, auf welchem die Computerprogrammcodemittel gespeichert sind.

Weitere bevorzugte Ausführungsvarianten gehen aus den abhängigen Patentansprüchen hervor.

## KURZE BESCHREIBUNG DER ZEICHNUNGEN

Im folgenden wird die Erfindung anhand von bevorzugten Ausführungsbeispielen, welche in den beiliegenden Zeichnungen dargestellt sind, näher erläutert. Es zeigen jeweils schematisch:

Figur 1   eine Grenzdehnungskurve;
Figur 2   Grenzdehnungskurven bei nichtproportionalen Dehnungsverläufen;
Figur 3   eine Grenzspannungskurve;
Figur 4   Werte eines ebenen Dehnungstensors im Verlauf einer Verformung;
Figur 5   Werte eines ebenen Spannungstensors im Verlauf einer Verformung;
Figur 6   ein Ablaufdiagramm einer Variante des erfinderischen Verfahrens.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugzeichen versehen.

**WEGE ZUR AUSFÜHRUNG DER ERFINDUNG**

Es wird, jeweils in einem Materialpunkt, ein gegebener Materialzustand bezüglich seiner Dehnungen durch einen äquivalenten Dehnungszustand repräsentiert, wobei der äquivalente Dehnungszustand durch einen proportionalen Dehnungsverlauf erzeugt ist, welcher zum gleichen Spannungszustand führt wie sie der gegebene Materialzustand aufweist. Der gegebene Materialzustand wird im folgenden "Zielzustand" genannt, da der gesuchte proportionale Dehnungsverlauf eben zu diesem Zustand führen soll.

Die Spannungen im Zielzustand werden durch beispielsweise einen ebenen Spannungszustand (plane stress) oder ebenen Spannungstensor [$\sigma_{xx}$, $\sigma_{yy}$, $\sigma_{xy}$] repräsentiert. Durch eine Hauptachsentransformation ist der Spannungszustand [$\sigma_{xx}$, $\sigma_{yy}$, $\sigma_{xy}$] in bekannter Weise durch eine grössere und eine kleinere Hauptspannung $\sigma_I$, $\sigma_{II}$ dargestellt, und kann durch einen Punkt 8 in der Spannungsebene, wie in der **Figur 3,** repräsentiert werden. Die Spannungen werden durch eine FEM-Simulation der zu untersuchenden Umformoperation ermittelt. In der Spannungsebene ist auch die bekannte Fliessortkurve 9 gezeichnet. **Figur 5** zeigt beispielhaft zeitliche Verläufe des Spannungszustandes. **Figur 4** zeigt die ebenfalls in der Simulation ermittelten Verläufe des dazugehörigen ebenen Dehnungstensors. Die unregelmässigen Verläufe in den Figuren entsprechen nichtproportionalen Verformungswegen. Im Spannungsdiagramm sind zudem strichlierte Linien eingezeichnet, welche einem proportionalen Spannungsverlauf entsprechen, das heisst, dass zu jedem Zeitpunkt

$$\frac{\sigma_{yy}}{\sigma_{xx}} = const \quad \text{und} \quad \frac{\sigma_{xy}}{\sigma_{xx}} = const \; .$$

In der **Figur 1** ist beispielhaft der äquivalente Dehnungszustand 4p aus einem proportionalen Dehnungsverlauf eingezeichnet, welcher dem Spannungszustand 8 und dem Dehnungszustand 4n aus nichtproportionaler Dehnung der Figur 2 entspricht.

In einer bevorzugten Variante der Erfindung geschieht die Bestimmung von äquivalenten Dehnungen basierend auf wiederholten Vorwärtssimulationen mit proportionalem Dehnungsverlauf, die iterativ wiederholt und optimiert werden, bis der gesuchte Spannungszustand [$\sigma_{xx}$, $\sigma_{yy}$, $\sigma_{xy}$] erreicht wird. In weiteren bevorzugten Ausführungsformen der Erfindung werden die Ergebnisse von systematisch durchgeführten Vorwärtssimulationen gespeichert und für eine Rücktransformation (ggf. unter Interpolation) aus der Menge der Spannungszustände auf die Menge der zugrundeliegenden proportionalen Dehnungsverläufe, die zu diesen Spannungszuständen führen, verwendet.

In einer weiteren bevorzugten Ausführungsform der Erfindung geschieht eine rechnerische Bestimmung der äquivalenten Dehnung in der folgenden Weise, ausgehend von den Spannungen im Zielzustand. Die Notation verwendet im Folgenden anstelle der Indizes *x* und *y* die Ziffern *1* und *2*, und es ist zu berücksichtigen, dass die ebenen Spannungs- respektive Dehnungstensoren symmetrisch sind, d.h. z.B. $\sigma_{12} = \sigma_{21} = \sigma_{xy}$.

1. Aus dem ebenen Spannungszustand [$\sigma_{12}$, $\sigma_{22}$, $\sigma_{12}$] im Zielzustand wird über die Fliessortkurve des Materials die Fliessnormale, im Folgenden mit *n* (mit den Komponenten $n_{ij}$) bezeichnet, bestimmt.

2. Bei einem proportionalen Verformungsverlauf gilt für die plastischen Dehnungen $\varepsilon_{ij}^{p}$ entsprechend dem Fliessgesetz

$$\varepsilon_{ij}^{p} = \lambda \, n_{ij} \tag{1}$$

wobei λ ein noch unbekannter Skalar entsprechend dem plastischen Multiplikator ist. Gemäss dem Arbeitsprinzip gilt für das Produkt der Vergleichsdehnung $\bar{\varepsilon}$ (effective strain) und der Vergleichsspannung $\bar{\sigma}$ (effective stress)

$$\bar{\sigma} \, \bar{\varepsilon} = \sigma_{ij} \, \varepsilon_{ij}^{p} \tag{2}$$

wobei $\sigma_{ij}\,\varepsilon_{ij}^p$ die verkürzte Darstellung ist von $\sigma_{11}\,\varepsilon_{11}^p + \sigma_{22}\,\varepsilon_{22}^p + \sigma_{12}\,\varepsilon_{12}^p + \sigma_{21}\,\varepsilon_{21}^p$, also eine Funktion der Spannungen $\sigma_{ij}$ im Zielzustand, wie sie in der Simulation ermittelt wurden, und der noch unbekannten gesamten plastischen Dehnungen

3. Einsetzen von (1) in (2) und Auflösen nach $\lambda$ ergibt

$$\lambda = \frac{\overline{\sigma}\ \overline{\varepsilon}}{\sigma_{ij}\ n_{ij}} \qquad\qquad (3)$$

wodurch sich $\lambda$ bestimmen lässt. Dabei wird die Vergleichsspannung $\overline{\sigma}$ in bekannter Weise mit Hilfe der Fliessortbeschreibung aus dem Spannungszustand berechnet oder durch die Simulation bestimmt. Die Vergleichsdehnung $\overline{\varepsilon}$ ist aus der Simulation bestimmbar, die zum Zielzustand geführt hat. Alternativ kann die Vergleichsdehnung auch aus Zustandsvariablen im Zielzustand z.B. der aktuellen Vergleichsspannung $\overline{\sigma}$ und der Verfestigungskurve des Materials gerechnet werden. Der Ausdruck $\sigma_{ij}\,n_{ij}$ (ausgeschrieben: $\sigma_{11}\,n_{11} + \sigma_{22}\,n_{22} + \sigma_{12}\,n_{12} + \sigma_{21}\,n_{21}$) ist durch die vorgegebenen Spannungen im Zielzustand und durch die Fliessnormale bestimmt.

4. Mit dem Wert von $\lambda$ sind anhand von (1) die plastischen Dehnungen $\varepsilon_{11}^p,\ \varepsilon_{22}^p,\ \varepsilon_{21}^p = \varepsilon_{12}^p$, berechenbar und aus diesen wiederum durch Hauptachsentransformation die Hauptdehnungen $\varepsilon_I, \varepsilon_{II}$.

Dieses Vorgehen vernachlässigt die elastischen Anteile der Verformung gegenüber den plastischen Anteilen. Die resultierenden Fehler liegen bei typischen Materialien wie Stahl wesentlich unter einem Prozent und sind vernachlässigbar.

**Figur 6** zeigt einen Ablauf des Verfahrens, mit den Schritten:

- Berechnung von Dehnungen und Spannungen im Zielzustand eines Materialpunktes durch die Simulation 61;
- Berechnen einer proportionalen Belastung, welche zu den Spannungen im Zielzustand führt 62;
- Bestimmen einer äquivalenten Dehnung entsprechend dieser proportionalen Belastung 63; und
- Verwenden dieser äquivalenten Dehnung als Dehnungszustand im Zielzustand des Materialpunktes 64, beispielsweise durch visuelle Darstellung in einem Grenzdehnungsdiagramm, zusammen mit der Grenzdehnungskurve des betrachteten Materials.

**Patentansprüche**

1. Verfahren zur Grenzdehnungsanalyse, wobei für mindestens einen Materialpunkt eines durch einen Umformprozess umgeformten Bleches, von einem Ausgangszustand ausgehend ein Dehnungszustand in einem Zielzustand des Materialpunktes berechnet und in einem Grenzdehnungsdiagramm mit einer Grenzdehnungskurve (1) in Beziehung bringbar ist,
**dadurch gekennzeichnet, dass** die folgenden Schritte ausgeführt werden:

   • Simulation des Umformprozesses und Berechnung von dabei resultierenden Dehnungen $\varepsilon$ und weiteren Zustandsvariablen des Materials in mindestens einem Materialpunkt des Bleches;
   • Berechnen der weiteren Zustandsvariablen des Materials im Zielzustand (8) des mindestens einen Materialpunktes;
   • Berechnen einer proportionalen Belastung, welche zu einem Zustand entsprechend den weiteren Zustandsvariablen des Materials in diesem Zielzustand (8) führt;
   • Bestimmen einer äquivalenten Dehnung (4) entsprechend dieser proportionalen Belastung; und
   • Verwenden dieser äquivalenten Dehnung (4) als Dehnungszustand im Zielzustand des Materialpunktes.

2. Verfahren gemäss Anspruch 1, wobei der letzte Schritt aufweist die

   • visuelle Darstellung der äquivalenten Dehnung in einem Dehnungsraum, zusammen mit einer Grenzdehnungskurve (1), wobei die äquivalente Dehnung (4) vorzugsweise durch Hauptdehnungen $\varepsilon_I, \varepsilon_{II}$ repräsentiert ist.

**3.** Verfahren gemäss Anspruch 1 oder 2, wobei die weiteren Zustandsvariablen im Zielzustand (8) unabhängig vom Weg sind, über welchen sie erreicht wurden.

**4.** Verfahren gemäss Anspruch 1 oder 2 oder 3, wobei die weiteren Zustandsvariablen die Spannungen in dem mindestens einen Materialpunkt sind.

**5.** Verfahren gemäss einem der Ansprüche 1 bis 4, wobei die Schritte zur Bestimmung der proportionalen Belastung und der äquivalenten Dehnung darin bestehen, dass für einen Materialpunkt die folgenden Schritte ausgeführt werden:

   • Vorgabe einer Dehnung ($\varepsilon_{11}$, $\varepsilon_{22}$, $\varepsilon_{12}$=$\varepsilon_{21}$);
   • Simulation eines proportionalen Dehnungsverlaufes entsprechend dieser Dehnungsvorgabe, dabei auch Berechnen der weiteren Zustandsvariablen des Materials;
   • Vergleich der Werte dieser berechneten weiteren Zustandsvariablen des Materials mit den Werten der weiteren Zustandsvariablen des Materials im Zielzustand, sowie wiederholtes, iteratives Anpassen der Vorgabe der Dehnung und Durchführen der Simulation durch ein Optimierungsverfahren, zur Annäherung der Werte der berechneten weiteren Zustandsvariablen des Materials an die Werte der weiteren Zustandsvariablen des Materials im Zielzustand;
   • nach Beendigung des Optimierungsverfahrens, Bestimmung der äquivalenten Dehnung als die zuletzt verwendete vorgegebene Dehnung.

**6.** Verfahren gemäss einem der Ansprüche 1 bis 4, wobei die Schritte zur Bestimmung der proportionalen Belastung und der äquivalenten Dehnung darin bestehen, dass die folgenden Schritte ausgeführt werden:

   • Bestimmen der äquivalenten Dehnung durch Auslesen aus einer Tabelle und/oder durch Auswerten von Funktionen, nach Massgabe der weiteren Zustandsvariablen des Materials im Zielzustand.

**7.** Verfahren gemäss einem der Ansprüche 1 bis 4, wobei die Schritte zur Bestimmung der proportionalen Belastung und der äquivalenten Dehnung darin bestehen, dass für einen Materialpunkt die folgenden Schritte ausgeführt werden:

   • Bestimmen des Spannungszustands ($[\sigma_{11}, \sigma_{22}, \sigma_{12}]$) oder von weiteren Zustandsvariablen ($[n_{11}, n_{22}, n_{12},]$) im Zielzustand;

   • Bestimmen von äquivalenten plastischen Dehnungen $\varepsilon_{ij}^{p}$ anhand einer rechnerbasierten Repräsentation der Fliessortkurve des Materials als koaxial zum Normalenvektor $n_{ij}$ der Fliessortkurve im Zielzustand und mit einer

   Länge $\varepsilon_{ij}^{p} = \lambda\, n_{ij}$ entsprechend einem plastischen Multiplikator $\lambda$ des Materials, welcher zu dem Zielzustand führt;
   • Gleichsetzen der äquivalenten plastischen Dehnung mit der Gesamtdehnung $\varepsilon_{ij}$.

**8.** Verfahren gemäss Anspruch 7, wobei der plastische Multiplikator $\lambda$ anhand der Materialgesetze aus dem Zustand, insbesondere aus dem Spannungs- und Dehnungszustand, im Zielzustand ermittelt wird.

**9.** Verfahren gemäss Anspruch 8, wobei zur Bestimmung von $\lambda$ die folgenden Schritte ausgeführt werden:

   • Bestimmen der Vergleichsspannung $\overline{\sigma}$ im Zielzustand;
   • Bestimmen der Vergleichsdehnung $\overline{\varepsilon}$ im Zielzustand;
   • Bestimmen von $\lambda$ als

$$\lambda = \frac{\overline{\sigma}\ \overline{\varepsilon}}{\sigma_{ij}\, n_{ij}}.$$

10. Datenverarbeitungssystem zur Grenzdehnungsanalyse, wobei das Datenverarbeitungssystem Mittel aufweist zur Durchführung des Verfahrens nach einem oder mehreren der Ansprüche 1 bis 9.

11. Computerprogramm zur Grenzdehnungsanalyse, welches auf einer Datenverarbeitungseinheit ladbar und ausführbar ist, und welches bei der Ausführung das Verfahren nach einem oder mehreren der Ansprüche 1 bis 9 ausführt.

12. Datenträger, enthaltend ein Computerprogramm gemäss Anspruch 11.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **THOMAS B. STOUGHTON.** A general forming limit criterion for sheet metal forming. *International Journal of Mechanical Sciences,* 2000, vol. 42, 1-27
- **WOLFGANG MÜSCHENBORN ; HANS-MARTIN SONNE.** Einfluss des Formänderungsweges auf die Grenzformänderungen des Feinblechs. *Arch. Eisenhüttenwes,* September 1975, vol. 46 (9), 597-602
- Path-dependence of the forming limit stresses in a sheet metal. **KENGOYOSHIDA.** Toshihiko Kuwabara, Mitsutoshi Kuroda, International Journal of Plasticity. Pergamon, 04. Dezember 2006, vol. 23, 361-384
- The system for sheet metal forming design of complex parts. **J. GRONOSTAJSKI ; A. MATUSZAK ; A. NIECHAJOWICZ ; Z. ZIMNIAK.** J. Materials Processing Technology. Elsevier, 20. Dezember 2004, vol. 157-158, 502-507
- An experimental and theoretical analysis on the application of stress-based forming limit criterion. **M. C. BUTUC ; J. J. GRACIO ; A. BARATA DE ROCHA.** Int. J. Mechanical Sciences. Pergamon, April 2006, vol. 48, 414-429